# EUROPÄISCHE PATENTANMELDUNG

(11) **EP 0 674 847 A1**
(43) Veröffentlichungstag der Anmeldung: **04.10.1995**
(21) Anmeldenummer: 95104686.1
(22) Anmeldetag: 30.03.1995
(51) Int. Cl.: A23P 1/08, A23L 1/072, B65D 65/46, A23G 3/00

(54) **Verfahren zur Herstellung von geformten Nahrungsmittelprodukten**

(30) Priorität: 02.04.1994 DE 4411525
(71) Anmelder: PVT Prozess-u. Verpackungstechnik GmbH, D-48683 Ahaus (DE)
(72) Erfinder: Finnah, Josef, D-48683 Ahaus (DE)
(74) Vertreter: Stenger, Watzke & Ring Patentanwälte

(57) **Zusammenfassung**

Um aus einer fließfähigen Lebensmittelmasse geformte Nahrungsmittelprodukte herzustellen, die ohne zusätzliche Umverpackung gehandelt und verkauft werden können, ohne gegen die üblichen Hygienevorschriften zu verstoßen, wird ein Verfahren vorgeschlagen, bei dem die Lebensmittelmasse verfestigt und danach mit einer eßbaren fruchthautähnlichen Hülle versehen wird.

## Beschreibung

Die Erfindung betrifft ein Verfahren zur Herstellung von geformten Nahrungsmittelprodukten aus einer fließfähigen Lebensmittelmasse.

Einer Lebensmittelmasse soll eine verzehrbare Hülle hinzugefügt werden, so daß einerseits eine zusätzliche Umverpackung für das eigentliche Lebensmittel erübrigt wird und wobei die Hülle die Eigenschaften einer derartigen zusätzlichen Verpackung übernimmt, nämlich beispielsweise als Hygieneschild zu wirken.

Lebensmittel, die man mit einer Schokoladenhülle umgibt, sind bereits in Form von Riegeln oder beispielsweise auch in Form von Pralinen bekannt. Es handelt sich dabei zwar um Lebensmittel im weitesten Sinne, insbesondere jedoch in der Regel um ausgesprochene Genußmittel.

Die bisherigen umhüllten Lebensmittel müssen mit einer zusätzlichen Verkaufsverpackung in den Markt gebracht werden. Pralinen oder Riegel können zwar kurz vor dem Verzehr angefaßt werden, bei längerer Handhabung und höherer Temperatur besteht jedoch die Gefahr des Schmelzens und Verschmierens. Desweiteren erfüllen die bekannten Hüllen kaum eine Schutzfunktion für das darin befindliche Produkt, sondern dienen in erster Linie als Dekoration und Ergänzung des eigentlichen Produktes. So weisen die bekannten Hüllen z. B. keine Möglichkeit auf, vor dem Verzehr abgewaschen zu werden oder als Hygieneschild für das darin befindliche Produkt zu dienen.

Weiterhin sind neben den angesprochenen Genußmitteln auch Lebensmittelprodukte, wie z. B. Käse bekannt, die von einer nicht eßbaren Schutzhülle umgeben sind, so daß also diese Schutzhülle vor dem Verzehr zu entfernen ist.

Die DE-OS 23 09 163 offenbart ein Verfahren zur Herstellung von Kunstfrüchten, bei dem das fließfähige Fruchtpüree mit einem Alginat- oder Pektatsol vermischt und mit gelösten Kalziumionen in Berührung gebracht wird, so daß ein Teil des Sols in der Grenzschicht beginnend geliert. Um eine vollständige Gelierung des Inneren und damit eine progressive Verfestigung durch die nach innen diffundierenden Kalziumionen zu verhindern, wird das so erhaltene Produkt anschließend erhitzt. Die mit diesem Verfahren hergestellten Fruchtprodukte bestehen aus einem fließfähigen oder plastischen Inneren und einem verfestigten Äußeren.

Ausgehend von diesem Stand der Technik liegt der Erfindung die **Aufgabe** zugrunde, aus einer fließfähigen Lebensmittelmasse geformte Nahrungsmittelprodukte herzustellen, die ohne zusätzliche Umverpackung gehandelt und verkauft werden können, ohne gegen die üblichen Hygienevorschriften zu verstoßen.

Zur **Lösung** dieser Aufgabe wird ein Verfahren vorgeschlagen, bei dem die Lebensmittelmasse verfestigt und danach mit einer eßbaren fruchthautähnlichen Hülle versehen wird.

Vorteilhafte Ausgestaltungen des Verfahrens sind in den Unteransprüchen gekennzeichnet.

Die Erfindung wird anhand der Fig. I bis VI näher erläutert:
- Fig. I: zeigt dabei eine Draufsicht auf eine runde Tablette beliebiger Größe, die
- Fig. II und Fig. III: zeigen Produkte mit einer fruchtartigen Formgebung, die
- Fig. IV und Fig. V: zeigen Draufsichten auf Riegel unterschiedlicher Abmessungen und
- Fig. VI: zeigt einen Schnitt durch ein kugelförmig ausgestaltetes Produkt.

In den Figuren ist jeweils das eigentliche Produkt mit 1 gekennzeichnet, welches verfestigt und von einer Hülle 2 umgeben ist. Andere als die schematisch in den Zeichnungen dargestellten Formgebungen können beliebig gewählt werden.

Eine noch im Behandlungszustand flüssige oder fließfähige Lebensmittelmasse kann durch Temperatur-Zeit-Einwirkungen sowie durch Homogenisierungen derart verfestigt werden, daß sie als schnitt- und bißfest gilt. Die gleiche Wirkung kann bei dem Lebensmittel aber auch durch Hinzugabe von Bindemitteln und Stabilisatoren oder sonstigen Zusätzen erzielt werden, so daß das Produkt verfestigt wird.

Sowohl Lebensmittel, die nur durch Behandlungsvorgänge, als auch solche, die durch entsprechende Zugabe von Zusätzen verfestigt werden, können vor der Verfestigung mit zusätzlichen stückigen Anteilen von Lebensmitteln vermischt werden, um somit ein Mischprodukt beliebiger Geschmacksrichtung zu erhalten. So können beispielsweise Cerealien, Fruchtstücke, Schokosplitter oder ähnliche stückige Bestandteile der Lebensmittelmasse zugegeben werden.

Die Lebensmittelmasse kann dabei vor der Verfestigung einer Beaufschlagung mit einem neutralen Gas unterzogen werden, um ein aufgeschlagenes und lockeres Lebensmittel zu erhalten, welches trotz der gewünschten Festigkeit angenehm leicht zu kauen und zu genießen ist.

Je nach Behandlungsart des Lebensmittels kann dieses während des Verfestigungsverfahrens oder auch bereits nach der Verfestigung, indem es in bestimmte Formen gepreßt wird oder frei geformt wird, beliebig geformt werden, wobei durch diese Formgebung einerseits der Bekanntheitsgrad des Lebensmittels erhöht werden kann (man denke beispielsweise an Schokoladen mit typischen Formgebungen) oder die Geschmacksrichtung des Lebensmittels erkennbar wird, so kann beispielsweise ein Lebensmittel mit Apfelgeschmack eine Form entsprechend Fig. III aufweisen und ein Lebensmittel mit Birnengeschmack eine Form entsprechend Fig. II.

Die vorgenannten Formgebungen können auch dadurch entstehen, daß zunächst eine Hülle vorgefertigt wird, in welche mittels eines in der Hülle vorgesehenen Einfülloches das fließfähige Produkt eingefüllt wird. Daraufhin kann das Einfülloch der Hülle mit dem gleichen Hüllenmaterial verschlossen werden. In der Hülle kann dann die endgültige Verfestigung des Produktes erfolgen.

Andererseits kann das Lebensmittel zunächst verfestigt werden und anschließend in eine Hüllenmasse eingetaucht werden, die noch flüssig ist.

Schließlich kann auf das bereits verfestigte Lebensmittel eine spritzfähige Hüllenmasse im Spritzverfahren aufgetragen werden.

Die Hüllenmasse kann alternativ zu den oben genannten Möglichkeiten auch zunächst in mehreren Teilen vorgeformt werden, beispielsweise in Form von zwei Halbschalen, die nicht notwendigerweise gleich groß sein müssen, wobei beim Verschließen der Halbschalen zu einer ganzen Form das Lebensmittel im entweder bereits verfestigten Zustand oder aber noch im pastösen Zustand hinzugegeben wird.

Zusätzlich zu den anhand von Fig. II und III beschriebenen Hinweisen auf den Inhalt können die Umhüllungen durch farbige Aufdrucke Informationen über das Produkt vermitteln, beispielsweise kann die Formgebung der Hülle so grob strukturiert sein, daß hier auf die in der Lebensmittelmasse enthaltenen Cerealien hingewiesen wird, wobei durch eine unterschiedliche Einfärbung oder Bedruckung der Hülle dieser Eindruck noch verstärkt werden kann.

Dabei können die Umhüllungen auch textliche Hinweise enthalten, so daß eine zusätzliche Verpackung nicht ausschließlich aus dem Grund erforderlich wird, die notwendigen Produktangaben zu enthalten.

Je nach Zusammensetzung der Hüllenmasse kann sowohl eine Verzehrmöglichkeit der Hüllenmasse gegeben sein als auch eine das eigentliche Produkt schützende Eigenschaft dieser Hüllenmasse durch eine erhöhte Wasserdampf- und Gasdichtigkeit. Auf diese Weise wird eine vorzeitige Austrocknung oder Oxydation des in der Hülle enthaltenen Lebensmittels vermieden. Produkte dieser Art können dann in den Markt gebracht werden, ohne eine zusätzliche Verkaufsverpackung als Frischhalteverpackung zu benötigen.

Um den Lebensmitteln einen Schutz gegen Stöße oder sonstige Belastungen zu geben, kann eine Transportverpackung vorgesehen werden, wie sie beispielsweise von Früchten bekannt ist und die beispielsweise aus Pappwaben oder ähnlichen muldenartigen Transportverpackungen besteht. Dabei kann eine Eigenelastizität der Lebensmittelmasse sowie des Hüllmaterials dafür Sorge tragen, daß kurzfristige Druckbeaufschlagungen aufgenommen und selbsttätig wieder ausgeglichen werden, so daß durch derartige Stöße beim Transport keine Beeinträchtigung der Lebensmittel erfolgen kann, so daß die Lebensmittel beispielsweise nicht aufplatzen und beschädigt werden. Gegebenenfalls können sogar durch die Eigenelastizität zunächst auftretende Druckstellen in Form von Einbuchtungen und Verformungen ausgeglichen werden. Eine derartige Schutzfunktion ist beispielsweise von dickeren Fruchthüllen bekannt, beispielsweise von Orangen- oder Bananenhüllen.

Vorteilhaft kann die Produktumhüllung abwaschbar ausgebildet sein, so daß der Verbraucher das Produkt vor dem Verzehr abwaschen kann und anschließend mitsamt der Hülle verzehren kann, wie dies beispielsweise von Früchten bei Äpfeln, Birnen oder Beeren bekannt ist.

Durch die erfindungsgemäße Ausgestaltung des Lebensmittels ist ein ökonomischer ökologischer Vorteil eines derartigen Produktes möglich, da mit Ausnahme der Transportverpackung keine zusätzliche Verpackung erforderlich ist.

Da das eigentliche Lebensmittel, nämlich das in der Umhüllung enthaltene Produkt, verfestigt ist, ist es dem Verbraucher ebenso möglich, die Umhüllung zu entfernen, wobei aufgrund der Verzehreigenschaften die Hülle beispielsweise an Tiere verfüttert werden kann oder kompostiert werden kann.

Das erfindungsgemäße Verfahren ist insbesondere im Bereich von Milchprodukten anwendbar, so daß beispielsweise Joghurtprodukte in bißfester Form herstellbar sind, wobei diese Joghurtprodukte in an sich bekannter Weise stückige Anteile aufweisen können.

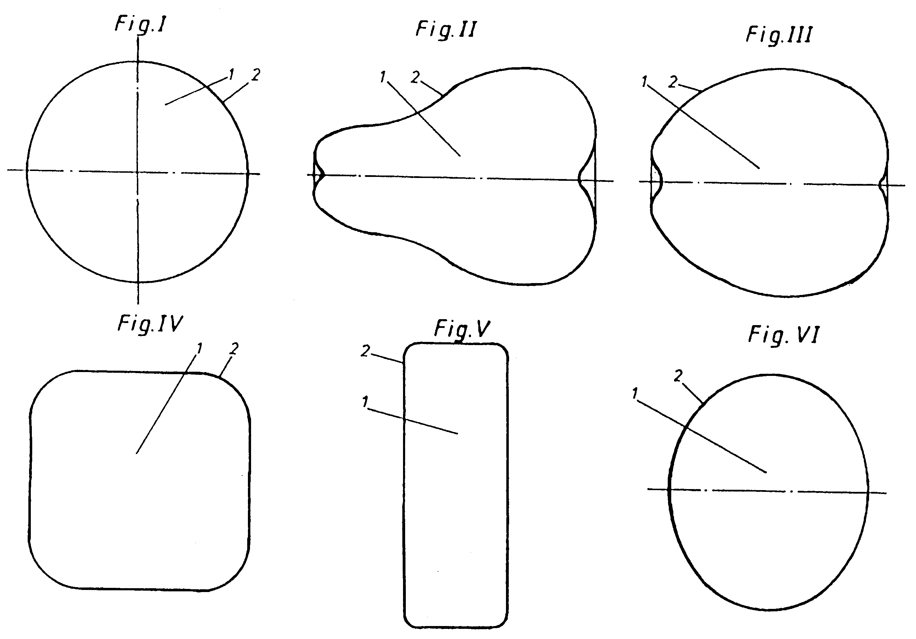

## Patentansprüche

1. Verfahren zur Herstellung von geformten Nahrungsmittelprodukten aus einer fließfähigen Lebensmittelmasse,
**dadurch gekennzeichnet,**
daß die Lebensmittelmasse verfestigt und danach mit einer eßbaren fruchthautähnlichen Hülle versehen wird.

2. Verfahren nach Anspruch 1, dadurch gekennzeichnet, daß die Lebensmittelmasse durch Temperaturbehandlung und/oder Homogenisierung verfestigt wird.

3. Verfahren nach Anspruch 1 oder 2, dadurch gekennzeichnet, daß die Lebensmittelmasse schnitt- und bißfest verfestigt wird.

4. Verfahren nach einem der vorhergehenden Ansprüche, dadurch gekennzeichnet, daß der Lebensmittelmasse Bindemittel und Stabilisatoren zugesetzt werden.

5. Verfahren nach einem der vorhergehenden Ansprüche, dadurch gekennzeichnet, daß der Lebensmittelmasse stückige Anteile beigemischt werden.

6. Verfahren nach einem der vorhergehenden Ansprüche, dadurch gekennzeichnet, daß die Lebensmittelmasse mit neutralem Gas beaufschlagt wird, um ein aufgeschlagenes, lockeres Lebensmittel zu erzielen.

7. Verfahren nach einem der vorhergehenden Ansprüche, dadurch gekennzeichnet, daß die Hülle aus einer natürlichen und/oder naturidentischen Masse hergestellt wird.

8. Verfahren nach einem der vorhergehenden Ansprüche, dadurch gekennzeichnet, daß die Hülle im Tauchverfahren aufgebracht wird.

9. Verfahren nach einem der vorhergehenden Ansprüche, dadurch gekennzeichnet, daß die Hülle im Spritzverfahren aufgetragen wird.

10. Verfahren nach einem der vorhergehenden Ansprüche, dadurch gekennzeichnet, daß die Form und/oder Farbe der Hülle so ausgebildet wird, daß sie die bekannten Lebensmitteln ähnlich ist.

11. Verfahren nach einem der vorhergehenden Ansprüche, dadurch gekennzeichnet, daß die Hülle mit Lebensmittelfarben bedruckt wird, wobei der Druck textliche Angaben enthalten kann.

12. Verfahren nach einem der vorhergehenden Ansprüche, dadurch gekennzeichnet, daß eine Hüllenmasse verwendet wird, die nach Verfestigung abwaschbar ist.

13. Verfahren nach einem der vorhergehenden Ansprüche, dadurch gekennzeichnet, daß eine Hüllenmasse verwendet wird, die eine erhöhte Wasserdampf- und Gasdichtigkeit aufweist.

14. Verfahren nach einem der vorhergehenden Ansprüche, dadurch gekennzeichnet, daß eine eine gewisse Eigenelastizität ausweisende Hülle verwendet wird, welche kurzfristige Druckbeaufschlagungen ausgleicht.
